# EUROPÄISCHE PATENTSCHRIFT

(11) **EP 1 851 569 B1**
(45) Veröffentlichungstag und Bekanntmachung des Hinweises auf die Patenterteilung: **07.11.2012**
(21) Anmeldenummer: 06707795.8
(22) Anmeldetag: 23.01.2006
(51) Int. Cl.: G01S 13/93, G01S 7/41, G01S 13/58

(54) **FAHRERASSISTENZSYSTEM MIT VORRICHTUNG ZUR ERKENNUNG VON SONDERSITUATIONEN**
DRIVER ASSISTANCE SYSTEM COMPRISING A DEVICE FOR RECOGNIZING SPECIAL SITUATIONS
SYSTEME D'ASSISTANCE AU CONDUCTEUR COMPORTANT UN DISPOSITIF DE DETECTION DE SITUATIONS EXCEPTIONNELLES

(30) Priorität: 10.02.2005 DE 102005005970
(43) Veröffentlichungstag der Anmeldung: 07.11.2007
(73) Patentinhaber: ROBERT BOSCH GMBH, 70442 Stuttgart (DE)
(72) Erfinder: MEISTER, Dirk, 71696 Moeglingen (DE); OECHSLE, Fred, 71642 Ludwigsburg (DE); WILHELM, Ulf, 71277 Rutesheim (DE); RANDLER, Martin, 88090 Immenstaad (DE); ARRAMON, Stephanie, 71706 Markgroeningen (DE)
(86) Internationale Anmeldenummer: PCT/EP2006/050371
(87) Internationale Veröffentlichungsnummer: WO 2006/084786

(56) Entgegenhaltungen:
- EP-A- 0 892 281
- WO-A-03/031216
- WO-A-03/031217

## Beschreibung

### Stand der Technik

Die Erfindung betrifft ein Fahrerassistenzsystemmiteinem Ortungssystem zur Ortung von Objekten im Umfeld eines Fahrzeugs, mindestens einer Assistenzfunktion, und einer Vorrichtung zur Erkennung von Verkehrssituationen durch Erkennung einer charaktristischen Signatur in mindestens einer Verteilung von Ortungsdaten in einem Kollektiv von georteten Objekten, wobei die Verteilung auch Ortungsdaten von stehenden oder langsamen Objekten umfaßt, die von der Assistenzfunktion nicht ausgewertet werden.

Fahrerassistenzsysteme, die den Fahrer eines Kraftfahrzeugs bei der Führung des Fahrzeugs unterstützen und/oder ihn vor gefährlichen Situationen warnen, beispielsweise vor einer drohenden Kollision, oder automatisch Maßnahmen zur Abwendung der Kollision oder zur Minderung der Kollisionsfolgen einleiten, basieren häufig auf einem Ortungssystem, insbesondere einem Radar- oder Lidarsystem, mit dem Objekte im Umfeld des Fahrzeugs, insbesondere andere Fahrzeuge, geortet werden können. Mit einem solchen Ortungssystem lassen sich zwar die Abstände und Relativgeschwindigkeiten der Objekte relativ genau messen, doch gestatten sie im allgemeinen keine oder allenfalls eine sehr grobe Unterscheidung, um welche Art von Objekten es sich bei den georteten Objekten handelt. Beispielsweise läßt sich anhand des Radarechos ein Objekts im allgemeinen nicht erkennen, ob es sich um ein anderes Fahrzeug handelt, das eine bestimmte Reaktion der Assistenzfunktion erfodert, oder um eine auf der Straße liegende Blechdose, die für die Assistenzfunktion irrelevant ist.

Ein typisches Beispiel eines solchen Fahrerassistenzsystems ist ein adaptiver Fahrgeschwindigkeitsregler, der auch als ACC-System (Adaptive Cruise Control) bezeichnet wird, und der es gestattet, die Geschwindigkeit des eigenen Fahrzeugs so zu regeln, daß ein Vorderfahrzeug in einem angemessenen Abstand verfolgt wird. Bei den bisher im Einsatz befindlichen ACC-Systemen wird das Problem der mangelhaften Objekterkennung im allgemeinen dadurch gelöst, daß Standziele, also Objekte, deren Relativgeschwindigkeit dem Betrage nach annähernd gleich der Eigengeschwindigkeit des Fahrzeugs ist, ignoriert werden. Dies ist möglich, weil die ACC-Systeme generell nur auf Autobahnen und gut ausgebauten Landstraßen eingesetzt werden, wo mit ruhenden Hindernissen auf der Fahrbahn im Normalfall nicht zu rechnen ist. Da somit stehende Objekte oder auch sehr langsam fahrende Fahrzeuge nicht erkannt werden oder zumindest keine Systemreaktion auslösen, kann es in Sonderfällen, etwa beim Auffahren auf ein Stauende, zu einer gefährlichen Situation kommen.

Aus EP-A-0 892 281 ist ein Fahrerassistenzsystem der eingangs genannten Art bekannt, bei dem anhand der Geschwindigkeitsverteilung der georteten Fahrzeuge, einschließlich des Gegenverkers, zwischen Fahrten auf Landstraßen, Fahrten auf Autobahnen und Stadtverkehr unterschieden werden kann.

### Vorteile der Erfindung

Die Erfindung mit den in Anspruch 1 angegebenen Merkmalen bietet den Vorteil, daß sie trotz der Beschränkungen des Ortungssystems eine Erkennung gefährlicher Sondersituationen, nämlich eines Stauendes oder einer Straßensperre ermöglicht, so daß geeignete Gegenmaßnahmen eingeleitet werden können oder zumindest eine Warnung an den Fahrer ausgegeben werden kann.

Die Erfindung beruht auf der Überlegung, daß zwar die Ortung eines einzelnen ruhenden Objektes auf der Fahrbahn noch keinen Rückschluß auf eine potentiell gefährliche Sondersituation erlaubt, daß solche Situationen jedoch sehr wohl erkannt werden können, wenn ein Kollektiv von mehreren Objekten gemeinsam betrachtet wird und dabei in der Verteilung der Ortungsdaten, etwa der Abstände, Relativgeschwindigkeiten und/oder Relativbeschleunigungen, eine charakteristische Signatur zu erkennen ist, die auf eine bestimmte Klasse von Sondersituationen hinweist.

Zum Beispiel befinden sich beim Auffahren auf ein Stauende zumeist eine Vielzahl von Fahrzeugen im Ortungsbereich des Radarsensors, und viele dieser Fahrzeuge werden eine geringe Geschwindigkeit haben oder stehen. Ein weiteres charakteristisches Merkmal besteht darin, daß die Vorderfahrzeuge, die nach und nach auf das Stauende auffahren, ihre Geschwindigkeit reduzieren und umso langsamer fahren, je näher sie dem Stauende sind. Trägt man die Geschwindigkeiten dieser Fahrzeuge gegen den Abstand auf, so erhält man eine charakteristische Signatur in der Form einer fallenden Kurve. Analog erhält man auch eine charakteristische Signatur für die Relativbeschleunigungen dieser Fahrzeuge.

Erfindungsgemäß ist deshalb ein herkömmliches Fahrerassistenzsystem durch eine Vorrichtung ergänzt, die auf die Ortungsdaten zugreift und bei Kollektiven der georteten Objekte, also bei mindestens zwei Objekten, nach einer charakteristischen Signatur der oben geschilderten Art sucht.

Vorteilhafte Ausgestaltungen der Erfindung ergeben sich aus den Unteransprüchen.

Insbesondere werden naturgemäß diejenigen Ortungsdaten ausgewertet, die sich auf die Längsbewegung der Objekte, also die Bewegung in Fahrtrichtung des eigenen Fahrzeugs beziehen. Da auch Radarsensoren ein gewisses Winkelauflösungsvermögen haben, ist es jedoch auch möglich, die Verteilung von Objekten, die bestimmte Kriterien hinsichtlich der Längsbewegung erfüllen, über die Breite der Fahrbahn auszuwerten.

Vorzugsweise sind charakteristische Signaturen für eine oder mehrere vordefinierte Sondersituationen in einer Situationsbibliothek gespeichert, so daß sie mit den aktuell aufgenommen Ortungsdaten verglichen werden können.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Fahrerassistenzsystems; und
- Figuren 2 bis 4: Diagramme von Beispielen für charakteristische Signaturen in den Bewegungsdaten georteter Objekte.

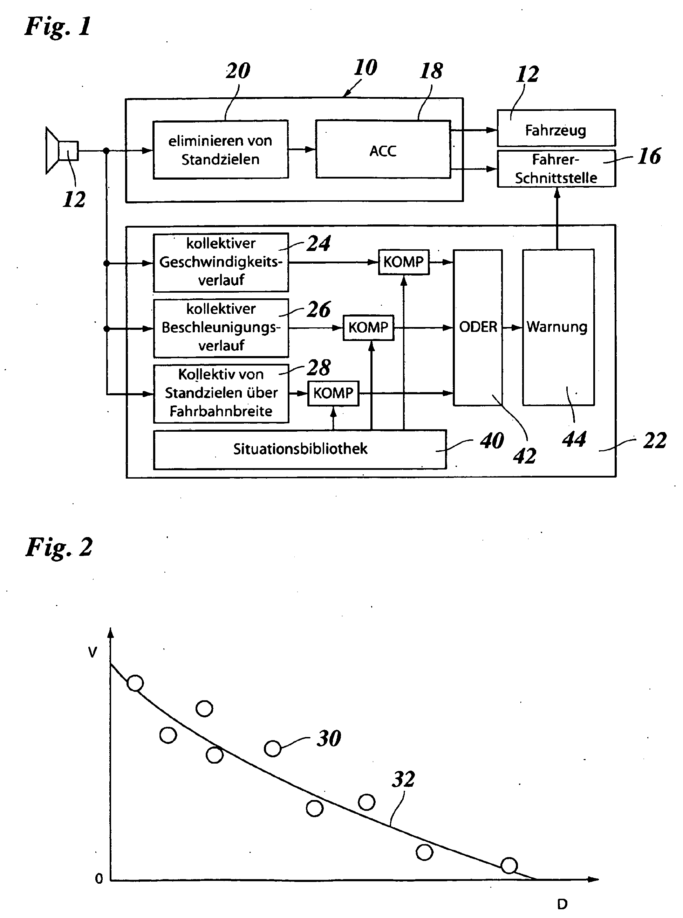

Das in Figur 1 gezeigte Fahrerassistenzsystem umfaßt zunächst einen herkömmlichen Fahrgeschwindigkeitsregler 10, der Ortungsdaten eines Radarsensors 12 auswertet, um die Geschwindigkeit eines Fahrzeugs 14 durch Eingriff in das Antriebs- oder Bremssystem zu regeln. Über eine Fahrerschnittstelle 16 kann der Fahrgeschwindigkeitsregler außerdem mit dem Fahrer kommunizieren. Da die Funktionsweise des Fahrgeschwindigkeitsreglers 10 als solche bekannt ist, wurde er in Figur 1 lediglich als vereinfachter Block dargestellt, mit einem eigentlichen ACC-Regler 18 und einer vorgeschalteten Verarbeitungsstufe 20, die hier nur aus Gründen der Deutlichkeit gesondert dargestellt ist und dazu dient, Standziele zu eliminieren. Genauer werden durch diese Verarbeitungsstufe alle Objekte, deren Absolutgeschwindigkeit kleiner als ein bestimmter Schwellenwert ist, von der weiteren Auswertung ausgeschlossen.

Zur Warnung des Fahrers vor Hindernissen, die gelegentlich auf Autobahnen auftreten können, beispielsweise vor einem Stauende oder einer Straßensperre, ist ergänzend ein Warnsystem 22 vorgesehen, das auf die Ortungsdaten des Radarsensors 12 vor Eliminierung der Standziele zugreift. Durch dieses Warnsystem werden somit sowohl für die beweglichen Ziele als auch für die Standziele die Relativgeschwindigkeiten, die Relativbeschleunigungen, die Abstände und die Azirnutwinkel registriert, wobei aus Abstand und Azimutwinkel eine Y-Koordinate berechnet wird, die die Lage des Objekts in der Richtung quer zur Fahrbahnlängsrichtung angibt. Aus diesen Daten werden drei Verteilungen 24, 26, 28 generiert, die hier als "kollektiver Geschwindigkeitsverlauf", "kollektiver Beschleunigungsverlauf" und "kollektive Standziele über Fahrbahnbreite" bezeichnet sind.

Figur 2 zeigt ein Beispiel für die Verteilung 24, bei der die Absolutgeschwindigkeiten V (berechnet aus Relativgeschwindigkeit und Fahrgeschwindigkeit des eigenen Fahrzeugs) gegen den gemessenen Abstand D aufgetragen sind. Die Verteilung gemäß Figur 2 ist typisch für eine Situation, in der das eigene Fahrzeug sowie eine Anzahl von Vorderfahrzeugen auf ein Stauende auffährt. Die Vorderfahrzeuge verringern demgemäß ihre Geschwindigkeit, und die am weitesten vom fahrenden Fahrzeuge sind am langsamsten. Gegebenenfalls ist auch schon das durch stehende Objekte gebildete Stauende in Sicht. Die Objekte 30 sind in Figur 2 als Kreise dargestellt, und die Kurve 32 stellt einen Fit dar, der die Geschwindigkeitsverteilung angibt. Der monoton fallende Verlauf der Kurve 32 ist eine charakteristische Signatur für ein Stauende.

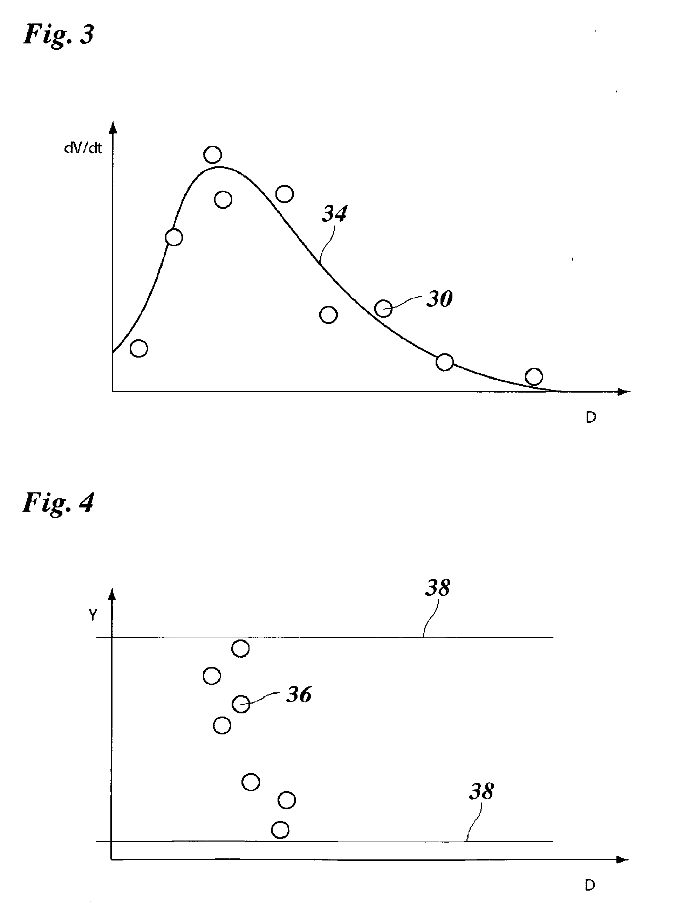

Figur 3 zeigt entsprechend ein Beispiel für die Verteilung 26. Hier sind die zeitlichen Ableitungen dV/dt der Relativgeschwindigkeiten der Objekte 30 gegen den Abstand D aufgetragen. Die Kurve 34 ist ein Fit für diese Verteilung und zeichnet sich dadurch aus, daß die Beschleunigungen (genauer: Verzögerungen) der Vorderfahrzeuge mit zunehmendem Abstand zunächst zu einem Maximum ansteigen und dann auf null abfallen. Diese Verteilung entspricht dem gleichen Bewegungsmuster der Vorderfahrzeuge, das bereits mit Bezug auf Figur 2 erläutert wurde. Durch parallele Auswertung der Verteilungen 24 und 26 wird eine höhere Erkennungssicherheit erreicht.

Figur 4 zeigt ein Beispiel für die Verteilung 28. Hier sind die Y-Koordinaten aller ruhenden Objekte 36 gegen den Abstand D aufgetragen. Die linken und rechten Fahrbahngrenzen sind als Geraden 38 eingezeichnet. Man erkennt, daß die Standziele oder ruhenden Objekte 36 bei einem bestimmten Abstand gleichsam eine Barriere über die gesamte Breite der Fahrbahn bilden. Das entspricht der typischen Konfiguration für ein Stauende, bei dem sich die Fahrzeuge auf allen Fahrbahnspuren etwa gleich weit zurückgestaut haben. Die Anzahl der Objekte 36 kann größer sein als die Anzahl der tatsächlich vorhandenen stehenden Fahrzeuge, da sich ein einzelnes Fahrzeug durch mehrere als Objekte 36 interpretierte Reflexionsziele im Radarbild abzeichnen kann. In Figur 4 lassen sich weiterhin zwei Gruppen von Objekten unterscheiden. Die vier Objekte mit den größten Y-Koordinaten haben einen etwas kleineren Abstand als die drei Objekte mit der kleineren Y-Koordinate. Dies entspricht der Möglichkeit, daß die Stauenden auf verschiedenen Spuren in etwas unterschiedlichen Abständen liegen, und gehört ebenfalls zur charakteristischen Signatur eines Stauendes.

Eine Verteilung entsprechend Figur 4, bei der sämtliche Objekte annähernd in gleichem Abstand liegen, könnte auch einer durch Polizeifahrzeuge oder Schranken gebildeten Totalsperrung der Fahrbahn entsprechen.

Wie Figur 1 zeigt, werden die in Figuren 2 bis 4 dargestellten Verteilungen für die einzelnen Kollektive jeweils in einem Vergleicher KOMP mit Daten aus einer Situationsbibliotkek 40 verglichen. In dieser Situationsbibliothek sind die charakteristischen Signaturen für ein Stauende oder, allgemeiner, für die zu erkennende Situation gespeichert. Die Situationsbiblithek kann beispielsweise erstellt werden, indem die zu erkennenden Situationen in zahlreichen Simulationen oder realitätsnahen Experimenten durchgespielt werden und dabei mit einem System, das mit dem in Figur 1 gezeigten System funktionsgleich ist, die verschiedenen Verteilungen aufgezeichnet und für jeden Verteilungstyp gesondert einer statistischen Analyse (Mittelwertbildung und Bestimmung von Toleranzgrenzen) unterzogen werden.

Wenn mindestens einer der Vergleicher KOMP eine Übereinstimmung der Verteilung mit einer zugehörigen Signatur aus der Situationsbibliothek 40 feststellt, wird ein logisches Signal "1" an ein ODER-Gatter 42 ausgegeben, und dies bewirkt über einen Warnsignalgeber 44 und die Fahrerschnittstelle 16 die Ausgabe eines akustischen, optischen oder kinästhetischen Signals, so daß der Fahrer vor der Gefahrensituation gewarnt wird.

Wahlweise kann anstelle des ODER-Gatters 42 auch eine komplexere Schaltung verwendet werden, die anstelle von logischen Signalen quantitative Signale der Vergleicher KOMP auswertet, die den Grad der Übereinstimmung der gemessenen Verteilung mit der Signatur angeben. Das Warnsignal wird in diesem Fall dann ausgelöst, wenn die Summe der Übereinstimmungen aller Verteilungen 24, 26 und 28 mit ihren entsprechenden Signaturen oberhalb eines bestimmten Schwellenwertes liegt. Der vom Vergleicher ausgegebene Grad der Übereinstimmung kann dabei auch davon abhängig sein, wieviele Einzelobjekte das betreffende Kollektiv umfaßt. Die Anzahl der Objekte, die als Verteilung betrachtet werden, sollte mindestens gleich zwei sein. Eine größere Mindestanzahl von Objekten verringert die Gefahr von Fehlauslösungen.

## Patentansprüche

1. Fahrerassistenzsystem mit einem Ortungssystem (12) zur-Ortung von Objekten (30, 36) im Umfeld eines Fahrzeugs, mindestens einer Assistenzfunktion (18), und einer Vorrichtung (22) zur Erkennung von Verkehrssituationen durch Erkennung einer charakteristischen Signatur in mindestens einer Verteilung (24, 26, 28) von Ortungsdaten in einem Kollektiv von georteten Objekten, wobei die Ortungsdaten Absolutgischwindigkuten (V) der Objeckte, Absteïnde (D) und/ oder Relativ bescheum jungen (dv/dt) zwischen dem Fahrzung und den Ojeckten darstellen, und wobei die mindestens eine Verteilung (24, 26, 28) auch Ortungsdaten von stehenden oder langsamen Objekten (30, 36) umfaßt, die von der Assistenzfunktion (18) nicht ausgewertet werden, **dadurch gekennzeichnet daß** die genannte Vorrichtung (22) dazu ausgebildet ist, die Sondersituationen Stauende und/oder Straßensperre, anhand einer für diese Sondersituationen charakteristischen Signatur in der mindestens einen Verteilung zu erkennen, wobei
die Verteilung (24) die Absolut geschwindigkeit (v) der Objekte (30) in Abhängigkeit ven inrem Abstand (D) zum Fahrzeny angibt, und daß die zugehörige charakteristische Signatur in einer monotonen Abnahme der Absolut geschwindigkeiten (V) der Objected mit wachsendem Abstand (D) besteht.

2. Fahrerassistenzsystem nach Anspruch 1, **dadurch gekennzeichnet, daß** eine weitere der mindestens einen verteilung (26) die Relativbeschleunigungen der Objekte (30) in Abhängigkeit vom Abstand (D) angibt und daß die zugehörige charakteristische Signatur einem Anstieg des Betrags der Relativbeschleunigungen zu einem Maximum und dann einem monotonen Abfall der Relativbeschleunigungen mit wachsendem Abstand entspricht.

3. Fahrerassistenzsystem nach einem der Ansprüche 1 bis 2, **dadurch gekennzeichnet, daß** eine weitere der mindestens einen daß Verteilung (28) die Y-Koordinaten von stehenden Objekten (36) in der Richtung quer zur Fahrtrichtung angibt und daß die zugehörige charakteristische Signatur einer Verteilung der stehenden Objekte (36) im wesentlichen über die gesamte Fahrbahnbreite entspricht.

4. Fahrerassistenzsystem nach einem der vorstehenden Ansprüche, **gekennzeichnet durch** eine Situationsbibliothek (40), in der die charakteristischen Signaturen gespeichert sind, und mindestens einen Vergleicher (KOMP) zum Vergleich der mindestens einen Verteilung der Ortungsdaten mit der charakteristischen Signatur.

5. Fahrerassistenzsystem nach Anspruch 4, **dadurch gekennzeichnet, daß** die Vorrichtung (22) dazu ausgebildet ist, mehrere Verteilungen (24, 26, 28) der Ortungsdaten aufzunehmen, daß für jede dieser Verteilungen ein gesonderter Vergleicher (KOMP) vorgesehen ist, und daß eine Einrichtung (42) zur Verknüpfung der Vergleichsergebnisse vorgesehen ist.

6. Fahrerassistenzsystem nach einem der vorstehenden Ansprüche, **dadurch gekennzeichnet, daß** die Vorrichtung (22) einen Warnsignalgeber (44) zur Erzeugung eines Warnsignals bei Erkennung einer Sondersituation aufweist.

## Claims

1. Driver assistance system comprising a locating system (12) for locating objects (30, 36) in the surroundings of a vehicle, at least one assistance function (18), and a device (22) for detecting traffic situations by detecting a characteristic signature in at least one distribution (24, 26, 28) of locating data in a collection of located objects, wherein the locating data is absolute speeds (V) of the objects, distances (D) and/or relative accelerations (dV/dt) between the vehicle and the objects, and wherein the at least one distribution (24, 26, 28) also comprises locating data of stationary or slow objects (30, 36) which are not evaluated by the assistance function (18), **characterized in that** the specified device (22) is designed to detect the special situations of the end of a traffic jam and/or road block, on the basis of a signature in the at least one distribution which is characteristic of these special situations, wherein the at least one distribution (24) indicates the absolute speed (V) of the objects (30) as a function of their distance (D) from the vehicle, and **in that** the associated characteristic signature comprises a monotonous decrease in the absolute speeds (V) of the objects as the distance (D) increases.

2. Driver assistance system according to Claim 1, **characterized in that** a further distribution (26) of the at least one distribution (26) indicates the relative accelerations of the objects (30) as a function of the distance (D), and **in that** the associated characteristic signature corresponds to an increase in the absolute value of the relative accelerations with respect to a maximum value and then to a monotonous decrease in the relative accelerations as the distance increases.

3. Driver assistance system according to one of Claims 1 to 2, **characterized in that** a further distribution (28) of the at least one distribution (28) indicates the Y co-ordinates of stationary objects (36) in the direction transversally with respect to the direction of travel, and **in that** the associated characteristic signature corresponds to a distribution of the stationary objects (36) essentially over the entire width of the carriageway.

4. Driver assistance system according to one of the preceding claims, **characterized by** a situation library (40) in which the characteristic signatures are stored, and at least one comparator (KOMP) for comparing the at least one distribution of the locating data with the characteristic signature.

5. Driver assistance system according to Claim 4, **characterized in that** the device (22) is designed to record a plurality of distributions (24, 26, 28) of the locating data, **in that** a separate comparator (KOMP) is provided for each of these distributions, and **in that** a device (42) is provided for logically linking the comparison results.

6. Driver assistance system according to one of the preceding claims, **characterized in that** the device (22) has a warning signal generator (44) for generating a warning signal when a special situation is detected.

## Revendications

1. Système d'assistance au conducteur comprenant un système de localisation (12) pour localiser des objets (30, 36) dans l'environnement d'un véhicule, au moins une fonction d'assistance (18) et un dispositif (22) pour reconnaître des situations de trafic en reconnaissant une signature caractéristique dans au moins une répartition (24, 26, 28) des données de localisation dans un ensemble d'objets localisés, les données de localisation représentant des vitesses absolues (V) des objets, des distances (D) et /ou des accélérations relatives (dV/dt) entre le véhicule et les objets, et l'au moins une répartition (24, 26, 28) comprenant également les données de localisation d'objets immobiles ou lents (30, 36) qui ne sont pas interprétés par la fonction d'assistance (18), **caractérisé en ce que** ledit dispositif (22) est configuré pour reconnaître les situations particulières d'embouteillage et/ou de fermeture de route au moyen d'une signature caractéristique pour ces situations particulières dans l'au moins une répartition, l'au moins une répartition (24) indiquant la vitesse absolue (V) des objets (30) en fonction de leur distance (D) du véhicule, et **en ce que** la signature caractéristique associée se compose d'une diminution monotone des vitesses absolues (V) des objets à mesure que la distance (D) augmente.

2. Système d'assistance au conducteur selon la revendication 1, **caractérisé en ce qu'**une autre de l'au moins une répartition (26) indique les accélérations relatives des objets (30) en fonction de la distance (D) et **en ce que** la signature caractéristique associée correspond à une augmentation de la valeur des accélérations relatives vers un maximum et ensuite une diminution monotone des accélérations relatives à mesure que la distance augmente.

3. Système d'assistance au conducteur selon l'une des revendications 1 et 2, **caractérisé en ce qu'**une autre de l'au moins une répartition (28) indique les coordonnées Y d'objets immobiles (36) dans la direction transversale par rapport au sens du déplacement et **en ce que** la signature caractéristique associée correspond à une répartition des objets immobiles (36) pour l'essentiel sur toute la largeur de la chaussée.

4. Système d'assistance au conducteur selon l'une des revendications précédentes, **caractérisé par** une bibliothèque de situations (40), dans laquelle sont enregistrées les signatures caractéristiques, et au moins un comparateur (KOMP) pour comparer l'au moins une répartition des données de localisation avec la signature caractéristique.

5. Système d'assistance au conducteur selon la revendication 4, **caractérisé en ce que** le dispositif (22) est configuré pour enregistrer plusieurs répartitions (24, 26, 28) des données de localisation, **en ce qu'**un comparateur (KOMP) particulier est prévu pour chacune de ces répartitions et **en ce qu'**il est prévu un dispositif (42) pour lier logiquement les résultats des comparaisons.

6. Système d'assistance au conducteur selon l'une des revendications précédentes, **caractérisé en ce que** le dispositif (22) présente un générateur de signal d'alerte (44) pour générer un signal d'alerte en cas de détection d'une situation particulière.
